# EUROPEAN PATENT APPLICATION

(11) **EP 2 728 824 A1**
(43) Date of publication of application: **07.05.2014**
(21) Application number: 12190787.7
(22) Date of filing: 31.10.2012
(51) Int. Cl.: H04L 29/06

(54) **Secure group communication**

(71) Applicant: ABB Research Ltd., 8050 Zürich (CH)
(72) Inventor: Oriol, Manuel, 8049 Zürich (CH); Stoeter, Sascha, 8050 Zürich (CH); Obermeier, Sebastian, 5107 Schinznach-Dorf (CH); Hristova, Ana, 5400 Baden (CH); Hadeli, Hadeli, 5400 Baden (CH)
(74) Representative: ABB Patent Attorneys

(57) **Abstract**

The present invention is concerned with securing messages 4 within a communication network of an industrial process control system, in particular of a substation automation system. The invention provides secure communication in an Industrial Automation and Control System IACS controlling an industrial process with a plurality of nodes 1, 2, 3, i.e. communicating devices. For this purpose, a sender node 1 has a sender private key and receiver nodes have a sender public key. In an initial step a message 4 is encrypted by means of the sender private key. Subsequently, the encrypted message 4 is transmitted, i.e. multicasted, to a plurality of receiver nodes 2, 3. Two or more distinct receiver nodes 2, 3 decrypt the transmitted encrypted message 4 by means of the sender public key where successful encryption authenticates the messages 4 origin, i.e. the sender node 1. This way the multicasted message 4 is transmitted confidential and traceable with a low overhead for transmission.

## Description

### FIELD OF THE INVENTION

The invention relates to the field of securing an exchange of data via communication networks of an industrial process control system, in particular of a substation automation system. Specifically, the present invention relates to a method of and a system for securing messages within such a communication network.

### BACKGROUND OF THE INVENTION

For communication in an Industrial Automation and Control System (IACS), securing messages sent from one node to another is critical for reliable and safe operation. Communication systems exchange information in the form of messages or data packets. These messages are used to transmit IACS commands and data between the systems. Therefore, confidentiality, integrity, and authenticity of these messages are critical for safe and secure operation of IACSs. This is achieved by encrypting messages, in particular the message payload.

Modem communication systems also undergo the need to multicast or broadcast messages. Multicast is necessary whenever a message needs to be sent to multiple receivers or systems, e.g. distributing measurement data from a sensor to multiple parties for processing and storing, and novel approaches for distributed controller architectures to exchange state information. In particular, multicasting is needed for an IACS where many single measurements and control commands need to be distributed. Multicasting allows a sender to send a message or data packet to a group, i.e. a multicast group, by using a destination address identifying all group members. This allows a more efficient use of the communication infrastructure than by addressing each receiver of the multicast group individually.

However, encryption of multicast messages is difficult. In particular, the use of asymmetric cryptography for messages from an individual sender with multiple receivers is only possible by encrypting a message individually for each receiver with the receiver's public key. This, however, imposes a large overhead and does not leverage the benefits of multicasts or broadcasts, i.e. the reduction of network overhead. It also requires a lot of computation time for the sender, as a message or packet must be encrypted for each receiver individually. In addition, storage space for keeping certificates containing the public keys of the intended receivers is needed.

Furthermore, in particular for IACSs, multicast messages need to be not only confidential but also traceable, i.e., authenticated. In the case of substation automation systems operating according to the standard IEC 61850, Generic Object Oriented Substation Events (GOOSE) and SMV messages need to be sent to multiple receivers of a multicast group within 4 ms. The security scheme to be used is described in IEC 62351. The different security objectives include authentication of receiving and sending node through digital signatures, ensuring authorized access, prevention of eavesdropping, prevention of playback and spoofing, and intrusion detection. However, the high overhead to provide secure and authenticated messages may prevent the network from fulfilling the time constraints.

State of the art protocols for secure communication such as Secure Shell (SSH), Transport Layer Security (TLS), Secure Socket Layer (SSL), and Internet Protocol Security (IPsec) enable confidentiality and authenticity only for a point-to-point connection. The aforementioned protocols do not offer any solution for securing multicast messages.

The document US 2006/0168446 describes a method for multicast messages with a central group controller that sends invitations to prospective group members, where these members respond with a public key and a digital signature. Subsequently, the group controller sends a unicast message with a common group encryption key to each of the members using their public keys. As the group key is shared between all group members, this method cannot provide authentication of the individual sender of a message. The method also adds dependencies by introducing a group controller. In addition, it creates a large overhead from extensive verification of authenticity of group members and increases traffic by sending unicast messages containing the group key.

### DESCRIPTION OF THE INVENTION

It is therefore an objective of the invention to enable confidential and traceable multicast messaging at low computation costs. This objective is achieved by a method of securing communication in an Industrial Automation and Control System (IACS) and an IACS according to the independent claims. Preferred embodiments are evident from the dependent patent claims, wherein the claim dependency shall not be construed as excluding further meaningful claim combinations.

According to the invention, secure communication in an Industrial Automation and Control System (IACS) controlling an industrial process with a plurality of nodes or communicating devices is provided. For this purpose a sender node has a sender private key and each of a plurality of receiver nodes has a copy of a unique sender public key corresponding to the sender private key. In an initial step a message is encrypted by means of the sender private key, where the message is typically short, i.e. shorter than a key length, e.g. 256 to 512 bits. Essentially the entire message payload is encrypted.

Subsequently, the encrypted message is transmitted in multicast to a plurality of receiver nodes. Two or more distinct receiver nodes decrypt the transmitted encrypted message by means of the sender public key. Eventually, the message payload is processed at the two receiver nodes.

In a preferred variant of the invention, the sender node calculates and transmits a hash or other redundancy code of the message. Subsequently, the receiver nodes verify integrity of the message based on the hash. The verification may also include authenticating the sender node. Verification is carried out by comparing a hash of the decrypted received encrypted message to the transmitted hash.

In an advantageous embodiment of the invention, the message and the hash are encrypted where the hash may be previously appended to the message and may be separated from the message by a divider character. Afterwards, the decrypted message and hash may be split.

In an embodiment of the invention, the hash is shorter than a key length of a sender key, and preferably limited to less than ten bits. The hash itself is only needed to check integrity of the transmitted encrypted message and may therefore be short.

In a further variant of the invention, a number of nodes form a group of communicating nodes of the IACS, wherein the number of nodes may be restricted and controllable. All the sender public keys of the nodes in the communication group are considered confidential or treated as such. Accordingly, the sender public key of a node is only known to the members of the communication group to which the node belongs. In this sense, the sender public key is a "group-read-key" rather than a truly public key as known from conventional asymmetric cryptography.

The present invention also relates to an Industrial Automation and Control System IACS with a plurality of nodes, wherein a sender node has a sender private key and receiver nodes have a sender public key, adapted to encrypting a message by means of the sender private key, transmitting the encrypted message to a plurality of receiver nodes, decrypting, at two receiver nodes, the transmitted encrypted message by means of the sender public key, and processing the message payload at the two receiver nodes.

Accordingly, the invention reduces the network overhead while broadcasting a message and provides traceability and confidentiality of the message. This way the invention is suitable for an IACS with limited network bandwidth and computation power. In addition the invention reduces the number of keys necessary for secure broadcast and multicast communication between nodes; consequently, this reduces the key maintenance effort of the system. Furthermore, an existing Public Key Infrastructure (PKI) already in place may be used.

### BRIEF DESCRIPTION OF THE DRAWINGS

The subject matter of the invention will be explained in more detail in the following text with reference to preferred exemplary embodiments which are illustrated in the attached drawings, in which:
- Fig.1: schematically shows sending of confidential messages according to the state of the art;
- Fig.2: schematically shows sending of an authenticated message according to the state of the art and
- Fig.3: shows schematically multicasting a confidential and authenticated message according to the invention.

The reference symbols used in the drawings, and their meanings, are listed in summary form in the list of designations. In principle, identical parts are provided with the same reference symbols in the figures.

### DETAILED DESCRIPTION OF PREFERRED EMBODIMENTS

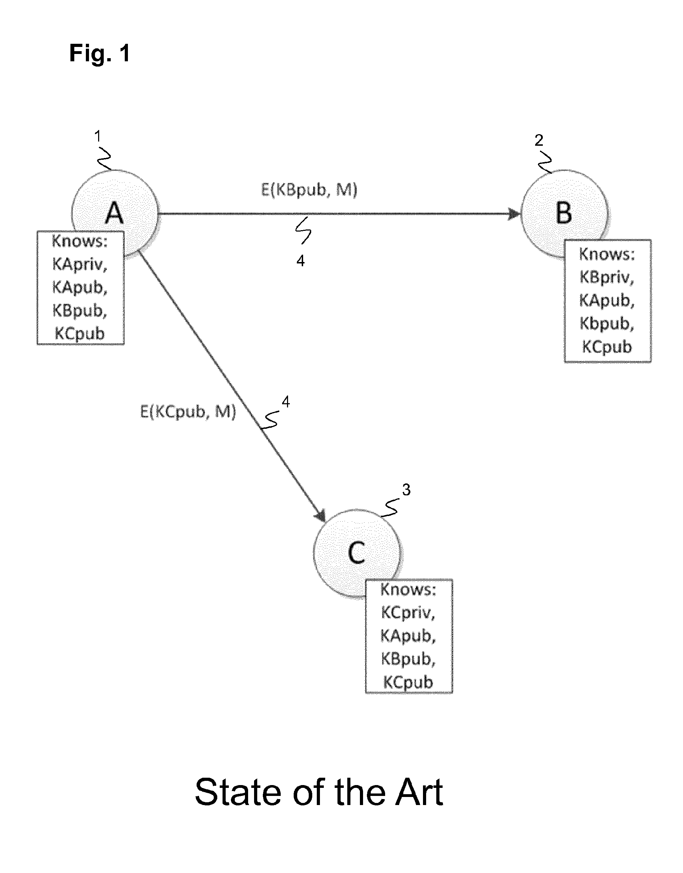

Fig.1 shows sending from a sender node 1 to receiver nodes 2, 3 a confidential message 4 using asymmetric encryption according to the state of the art. Generally, E(K,M) means that a message M is encrypted using key K. The message 4 is encrypted and decrypted using a pair of related keys, i.e. KBpub and KBpriv respectively. The freely distributed public key KBpub is used for encryption of the message 4 sent to node B. The private key KBpriv is only known to the receiver node B and is used for decryption of the message sent to node B. The same applies to the message 4 sent to the receiver node C using the respective keys KCpub and KCpriv. This way only the receiver node can decrypt the message 4 and its content is kept confidential. However, multicasting is not possible with encryption according to the state of the art, as each message 4 is encrypted and sent individually to each receiver node 2, 3. This causes a large overhead for encryption and sending of a message 4 to multiple receiver nodes 2, 3.

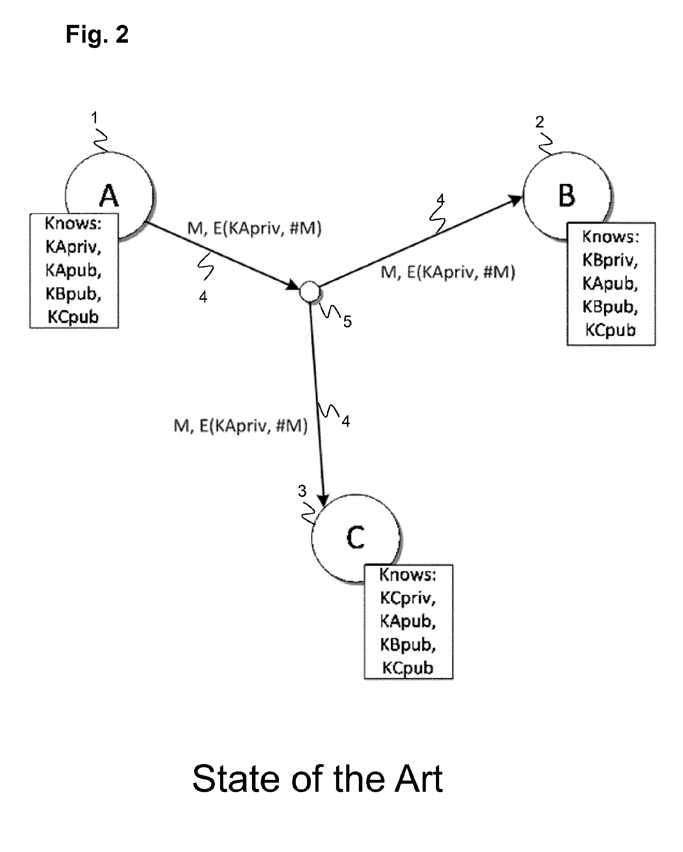

Fig.2 shows schematically authentication of a multicast message 4 sent from the sender node 1 to the receiver nodes 2, 3 using a multicast transmitter 5 for distributing the message 4 to the receiver nodes 2, 3. In order to provide security against message tampering and fake message generation, it is known in the art to send a message 4 with a hash #M. Generally, E(K,#M) means that a hash of the message M is encrypted using key K. The hash is also known as message authentication code (MAC), a message integrity code, integrity check value, cryptographic checksum or keyed hash.

The sent message 4 is received by the receiver node 2, 3 along with the respective hash #M. The receiver node 2, 3 recalculates a hash for the received message 4. The calculated hash is used to check if the received message 4 has been tampered with or has been altered in any way. For this purpose the recalculated hash is compared with the received hash #M. In case of any difference between the calculated hash and the received hash #M, the receiver node 2, 3 rejects the message 4 as altered and not authentic.

The hash #M for a message 4 may be calculated by first calculating a hash value for the message 4. A hash value is a value that is generated for a message 4 that depends on all the bits of the message 4. The hash value is also called a message digest and is equivalent to checksums that are used to detect message transmission errors. The hash value is generated with the help of one-way algorithms, such as MD5 and SHA, which produces hashes of sizes like 128 or 160 bit.

According to the state of the art, authentication of a message 4 is carried out by encrypting a hash #M, generally used for checking integrity, with the sender nodes 1 private key KApriv which in turn can be decrypted by the sender nodes 1 public key KApub distributed freely to every receiver node 2, 3. This way any receiver node 2, 3 can verify the origin of the message 4 by successful encrypting the message 4 with the sender nodes 1 public key KApub. A Public Key Infrastructure (PKI) is commonly used to manage the complex distribution of keys and certificates.

However, the hash #M is typically of the same length as the key KApriv used for encryption, e.g. 256 - 512 bits, and calculated on the entire message payload. In particular for an IACS, the exchanged messages 4 are usually short in the order of the key length. Thus, encryption of #M easily doubles the size of the message 4 sent. This causes the system to require a large bandwidth, which is generally not available in an IACS.

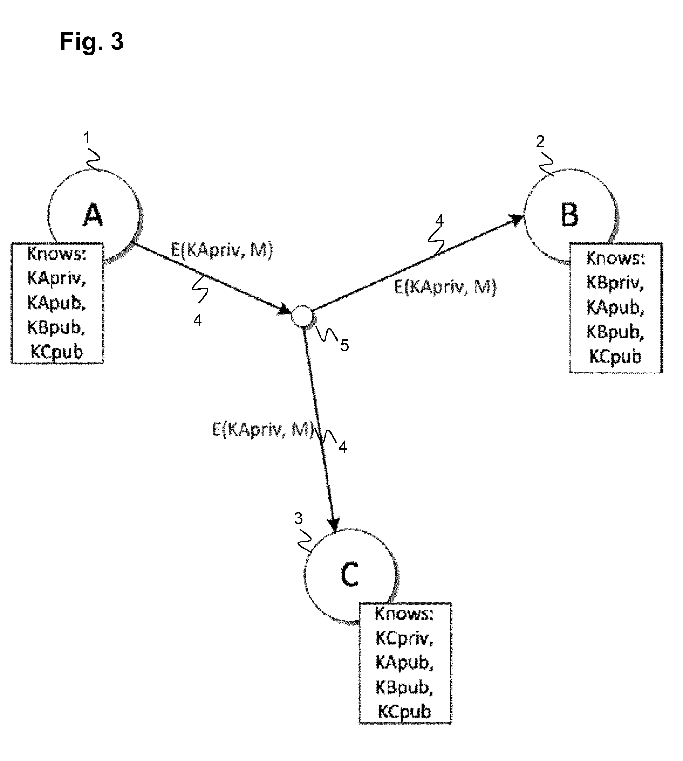

Fig.3 shows the method of multicasting a confidential and traceable message 4 according to the invention. In contrast to the state of the art, where only the hash or MAC is encrypted for authentication, a sender node 1 uses according to the invention its private key KApriv to encrypt essentially the entire message 4. The public key KApub to decrypt the encrypted message 4 is known only to the receiver nodes 2, 3 within the closed communication group. In this embodiment of the invention the public key is kept confidential, thus providing a high level of confidentiality for sending the message 4. For proper authentication of the sent message 4, the sender nodes private key KApriv may not be known by either receiver node 2, 3 or any other node but the sender node 1.

Thus, the message 4 is traceable to the sender node 1 by the receiver nodes 2, 3 by applying the correct public key KApub for decryption. In case of a successfully decrypted message the receiver nodes 2, 3 authenticate the sender node 1 as source of the message 4. For a message 4 sent from any of the other nodes 1, 2, 3 the method allows confidential and traceable transmitting as long as the message 4 is encrypted with the sender nodes 1 private key and the other nodes 2, 3 know the confidential public key of the sender node 1.

However, the encrypted message 4 without an appended authentication or signature, i.e. a hash or MAC, may not be sufficient for adequate authentication. Without a signature any message inserted by an attacker may be decrypted into some random but authenticated message by the receiver nodes 2, 3. Thus, a hash, MAC, or some other redundancy code may be used. The used hash does not have to be as extensive as a hash according to the state of the art of authentication and only on a few bits may be coded to avoid collisions. The reduced hash allows detecting whether someone has modified the content during transmission, or if someone has send a random message to imitate encrypted data. The purpose of the hash is to identify whether the message has been correctly transmitted and in addition correct decryption results in automatic authentication. Thus, no additional authentication or signature is necessary.

The hash may be appended to the message 4 by the sender node 1 prior to encryption separated by a divider character, e.g. based on an XML schema. The entire message 4 together with the hash may be then decrypted by the receiver nodes 2, 3. Subsequently, the decrypted message 4 may be split into two parts, the plaintext message and the hash. The hash is then recalculated by the receiver nodes 2, 3 and cross checked with the received decrypted hash. For a match integrity of the message 4 is given and at the same time the sender node 1 is authenticated. Thereafter, the message 4 may be further processed by the receiver nodes 2, 3.

The combination of shared secrets, i.e. public keys KApub, KBpub, and KCpub, with individual keys, i.e private keys KApriv, KBpriv, and KCpriv, allows confidentiality for multicasting messages 4 while requiring only one cryptographic operation for sending the encrypted message 4 to any number of nodes 1, 2, 3.

According to the invention, public keys KApub, KBpub, and KCpub are used as a group secret, thus, treated with the same confidentiality level as private keys KApriv, KBpriv, and KCpriv, i.e. distribution of these keys is closely controlled. This limits the applicability of the method for e.g. the internet, however, for an IACS with a possibly large but limited amount of sender and receiver nodes 1, 2, 3 it is highly adequate.

Preferably, the functional modules and/or the configuration mechanisms are implemented as programmed software modules or procedures, respectively; however, one skilled in the art will understand that the functional modules and/or the configuration mechanisms can be implemented fully or partially in hardware.

### LIST OF DESIGNATIONS

- 1: Sender node
- 2: Receiver node
- 3: Receiver node
- 4: Message
- 5: Multicast transmitter

## Claims

1. A method of securing communication in an Industrial Automation and Control System IACS with a plurality of nodes (1, 2, 3), wherein a sender node (1) has a sender private key and receiver nodes (2, 3) have a sender public key corresponding to the sender private key, comprising
- encrypting a message (4) by means of the sender private key,
- transmitting the encrypted message (4) to a plurality of receiver nodes (2, 3),
- decrypting, at two receiver nodes (2, 3), the transmitted encrypted message (4) by means of the sender public key, and
- processing the message payload at the two receiver nodes (2, 3).

2. The method of claim 1, comprising
- calculating and transmitting, by the sender node (1), a hash of the message, and
- verifying, by the receiver nodes (2, 3), an integrity of the message (4) based on the hash.

3. The method of claim 2, comprising
- encrypting the message (4) and the hash, and
- splitting the decrypted message (4) and hash.

4. The method of claim 2, wherein the hash is shorter than a key length of a sender key, and preferably limited to less than ten bits.

5. The method of one of claims 1 to 4, wherein a number of nodes (1, 2, 3) form a communication group, comprising
- considering confidential all the sender public keys of the nodes (1, 2, 3) in the communication group.

6. An Industrial Automation and Control System IACS with a plurality of communicating nodes (1, 2, 3), of which a sender node (1) has a sender private key and receiver nodes (2, 3) have a sender public key for decrypting a message encrypted by means of the sender private key.
